## Europäisches Patentamt

## European Patent Office

## Office européen des brevets

(11) Publication number: **0 095 218**
**B1**

(12) **EUROPEAN PATENT SPECIFICATION**

(45) Date of publication of patent specification: **29.10.86**

(51) Int. Cl.⁴: **B 65 H 3/08**

(21) Application number: **83200733.0**

(22) Date of filing: **25.05.83**

---

(54) **A sheet dispenser.**

---

(30) Priority: **26.05.82 GB 8215349**

(43) Date of publication of application:
**30.11.83 Bulletin 83/48**

(45) Publication of the grant of the patent:
**29.10.86 Bulletin 86/44**

(84) Designated Contracting States:
**BE DE FR GB**

(56) References cited:
**DE-A-1 806 451**
**DE-A-2 915 718**
**FR-A-2 105 164**
**GB-A-1 547 776**
**GB-A-2 018 726**
**US-A-1 400 573**

(73) Proprietor: **AGFA-GEVAERT naamloze vennootschap**
**Septestraat 27**
**B-2510 Mortsel (BE)**

(72) Inventor: **Nelen, Petrus Renatus**
**Paviljoenweg 13**
**B-2190 Essen (BE)**

---

Courier Press, Leamington Spa, England.

## Description

The present invention relates to a sheet dispenser comprising at least one flexible sucker cup for the gripping of a sheet.

Sheet dispensers of this type are used for the purpose of sequentially transferring sheets from one place to another, e.g. from a sheet stack holder to a position from or at which the sheets are handled or treated automatically by other means. Such dispensers are used for example in printing machines and document copying machines.

One type of prior art dispensers requires the sucker cups to be coupled to a vacuum source for establishing the suction effect. Appropriate valves control the initiation and the release of the vacuum in the sucker cups at an appropriate moment in the operative cycle of the sucker cups.

Another type of prior art sheet grippers incorporates a cup component including a flexible sucker cup which when pressed against a sheet to be held becomes deformed with the consequential expulsion of air from within the cup and gripping of the sheet by the cup, and a vent passage communicating between the interior of the cup and the exterior atmosphere; a supporting body upon which said cup component is mounted; valve means for said vent passage; and biasing means for said valve means for keeping said vent passage closed during the gripping operation of said cup component.

Suchlike sheet dispenser is disclosed in US—A—1,400,573. The valve means of said dispenser is hand-controlled and the release of a gripped sheet can occur only by the actuation of the valve by the operator. Thereby, this type of dispenser is less suited for incorporation in an automatically operating apparatus.

It is the object of the present invention to provide a sheet dispenser with a flexible sucker cup that operates autonomously to establish the hold of a sheet, and that automatically releases the sheet as a pulling force is exerted that exceeds a pre-determined value.

According to the present invention, a sheet dispenser comprising at least one sucker-cup assembly with a cup component including a flexible sucker cup which when pressed against a sheet to be held becomes deformed with consequential expulsion of air from within the cup and gripping of the sheet by the cup, and a vent passage communicating between the interior of the cup and the exterior atmosphere, a supporting body upon which said cup component is mounted, valve means for said vent passage, and biasing means for said valve means for keeping said vent passage closed during the gripping operation of said cup component, is characterized thereby that it comprises a carriage carrying such supporting body for bodily displacement repetitively through an operating cycle for gripping a sheet at a pick-up station, advancing such sheet from that station to another station at which the sheet is released, and subsequently returning to said pick-up station for gripping another sheet; that the cup component is mounted for axial displacement towards and away from said supporting body; that said biasing means operates to urge said cup component into its position towards said supporting body; and that sheet releasing means is operative at the sheet release station of said operating cycle to cause movement of the cup component away from said supporting body against the action of said biasing means thereby to open said vent passage to atmospheric air and effect release of the gripped sheet.

The valve means is preferably constituted by an elastically deformable element fitted into or onto a rigid part of the body which supports the cup component.

In one embodiment of the invention, the vent passage is formed by a tube which is connected to the sucker cup and is axially slidable in said supporting body. This is a simple way of mounting the cup component and providing the required vent passage.

In another embodiment of the invention the cup component comprises a stem on which the sucker cup is mounted and which is axially slidable in the aforesaid supporting body, and also a collar which surrounds said stem; and the end of the vent passage remote from the sucker cup is in a surface of such collar, which surface is pressed against said sealing portion by the biasing means. This combination of features also favours a simple construction, and enables the co-operating sealing faces to be easily accessible for cleaning.

In a preferred embodiment of the invention the hold-releasing means comprises an oscillating bar or bars located so as, at the appropriate stage of the dispensing cycle, to bear against a sheet held by the sucker cup. Actuation of the oscillating bar(s) may occur as a function of time in a dispensing cycle or in dependence on the spatial position acquired by the sheet in course of being dispensed.

A sheet dispenser according to the invention is very advantageous for use in dispensing metal, e.g. aluminium, printing plates or printing plate blanks of different sizes, for example printing plates produced by electrophotographic offset platemakers.

Certain embodiments of the invention, selected by way of example, will now be described with reference to the accompanying drawings, in which:

Fig. 1 shows one form of a sucker-cup assembly,

Fig. 2 shows another form of a sucker-cup assembly, and

Fig. 3 shows part of a sheet dispenser according to the invention.

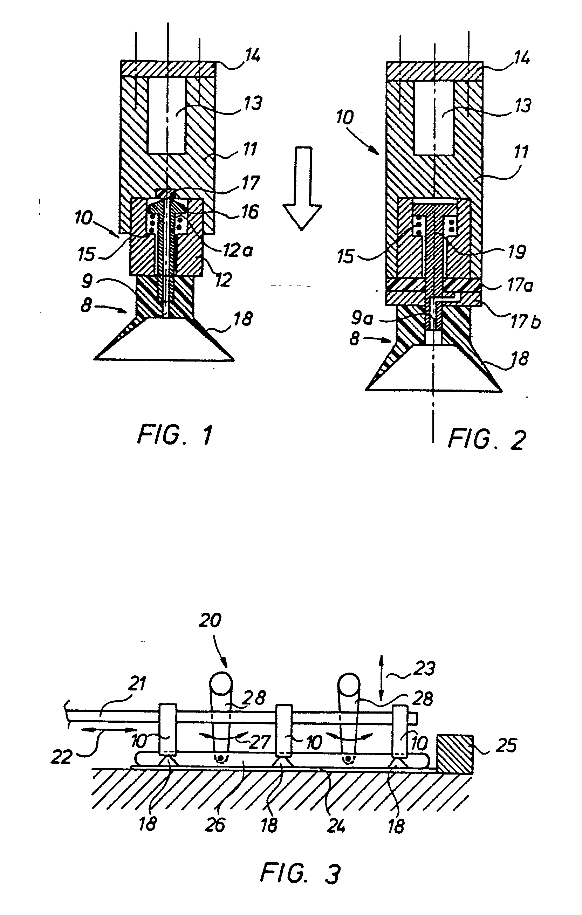

The sucker-cup assembly shown in Fig. 1 comprises a supporting body 10 which includes cylindrical members 11 and 12 fixed one in the other. Member 11 is provided with a transverse rectangular-section groove 13 for the purpose of mounting the assembly on a carrier bar (not shown) when the assembly is installed in a sheet dispensing apparatus. A cover member 14 is releasably secured to the member 11 e.g. by screws, so that it can be removed to permit the assembly to be easily removed from the bar.

The member 12 has a central bore of which an upper part 12a is of larger diameter than the lower part. The upper part 12a accommodates a biasing means in the form of a helical spring 15.

A cup component 8, comprising an elastically deformable sucker cup 18 and a tube 16, is fitted to the supporting body 10 so that the cup component is axially displaceable relative to such body. The tube 16, to which the sucker cup 18 is secured, is slidable in the bore of the body member 12. The tube has an enlarged head portion which is accommodated in the wider upper part 12 of that bore and provides a bearing face for one end of the spring 15. The spring 15 exerts an upward force on the cup component 8 and thereby holds the upper end of tube 16 against a sealing element 17 of an elastically deformable material which is fitted into a recess in the member 11. In the retracted position of the cup component 8 the said sealing element seals the upper end of the vent passage 9 extending through the tube 16, and also through the cylindrical body portion of the sucker cup 18.

In order to take hold of a sheet, the illustrated assembly has merely to be pressed downwardly onto the sheet. This causes deformation of the sucker cup 18 and consequent expulsion of air from its interior, the air escaping between the cup and the sheet. When it is required to release the sheet it is merely necessary to cause relative axial displacement between the body 10 and cup component 8 against the biasing force of spring 15. This can be done by lifting the body 10 while exerting restraining pressure on the sheet held by the cup, or by moving the cup 18 in a direction away from the body 10 while the latter is held stationary. Such movement can be effected by applying pressure against a sheet held by the cup, or direction against the cup itself or an attached part, e.g. a collar (if provided). The consequent separation of the sealing element 17 from the upper end of tube 16 places the vent passage 9 in communication with the atmosphere in the widened bore 12a, and the hold of the sucker cup on the sheet is therefore released.

In Fig. 2 the same reference numerals are used as in Fig. 1 to designate corresponding parts. The device shown in Fig. 2 differs from the Fig. 1 device in that the sucker cup 18 is mounted on a solid stem 19 in the lower end portion of which a portion of the vent passage 9a is formed. The stem is surrounded by a collar 17b in which an adjoining portion of such vent passage is formed. The upper extremity of the vent passage is located in the upper face of the collar 17b. The supporting body 10 is provided at its bottom end with a sealing element 17a of elastically deformable material and the collar 17b is normally held pressed against this sealing element by the force exerted by the spring 15.

The sheet dispenser 20 represented in Fig. 3 comprises a plurality of sucker cup assemblies having their supporting bodies 10 mounted on a carrier bar 21. The bar 21 is connected to a mechanism (not shown) by which the bar can be moved to and fro as indicated by the arrow 22, and up and down as indicated by the arrow 23. The mechanism is arranged to displace the holding devices through an operating cycle for the purpose of transferring sheets one by one from a pick-up station to a delivery point represented by an aligning bar 25, ready for being further handled or treated in a given way. When a sheet such as 24 has been brought by the sucker cup assemblies to the delivery point, the gripped sheet has to be released. For this purpose, the dispenser includes an oscillating bar 26 to which an oscillating motion as indicated by the arrows 27 can be imparted by pivoting arms 28. When the bar 26 is at the lowest point of its trajectory it bears against the sheet 24 and while the oscillating bar 26 is in that position, the carrier bar 21 is raised. Because the cup components are restrained from upward movement by their hold on the sheet 24, the upward movement of the bar causes the supporting bodies 10 to rise relatively to the cup components and in consequence the interiors of the cups 18 are placed in communication with atmosphere via the vent passages, whereby the sheet 24 is released.

**Claims**

1. Sheet dispenser comprising at least one sucker cup assembly with a cup component (8) including a flexible sucker cup (18) which when pressed against a sheet (26) to be held becomes deformed with consequential expulsion of air from within the cup and gripping of the sheet by the cup, and a vent passage (9, 9a) communicating between the interior of the cup and the exterior atmosphere, a supporting body (10) upon which said cup component is mounted, valve means (17, 17a) for said vent passage, and biasing means (15) for said valve means for keeping said vent passage closed during the gripping operation of said cup component, characterized in that said dispenser comprises a carriage (21) carrying such supporting body (10) for bodily displacement repetitively through an operating cycle for gripping at least one sheet at a pick-up station, advancing such sheet from that station to another station at which the sheet is released, and subsequently returning to said pick-up station for gripping another sheet; that the cup component is mounted for axial displacement towards and away from said supporting body (10); that said biasing means (15) operates to urge said cup component into its position towards said supporting body; and that sheet releasing means (26, 28) is operative at the sheet release station of said operating cycle to cause movement of the cup component (8) away from said supporting body (10) against the action of said biasing means (15) thereby to open said vent passage to atmospheric air and effect release of the gripped sheet.

2. A sheet dispenser according to claim 1, wherein said vent passage (9) is formed by a tube (16) which is connected to the sucker cup (18) and is axially slidable in said supporting body (10).

3. A sheet dispenser according to claim 1, wherein said cup component (8) comprises a stem (19) on which said sucker cup (18) is mounted and which is axially slidable in said supporting body (10), and also comprises a collar (17b) which surrounds said stem, and wherein the end of said vent passage (9a), remote from the sucker cup (18) is in a surface of such collar (17b) and that surface is pressed against said sealing portion (17a) by said biasing means (15).

4. A sheet dispenser according to claims 1 to 3, wherein said valve means (17, 17a) is constituted by an elastically deformable element fitted into or onto a rigid part of said supporting body (10).

5. A sheet dispenser according to claims 1 to 4, wherein said biasing means (15) is a spring.

6. Sheet dispenser according to claim 1, wherein said releasing means (26, 28) effects said movement of the cup component away from said supporting body by pressing against a sheet (24) held by the sucker cup (18).

7. A sheet dispenser according to claim 6, wherein said releasing means (26, 28) comprises an oscillating bar or bars for pressing against a said sheet (24) held by said sucker cup.

**Revendications**

1. Appareil d'alimentation en feuilles qui comprend: au moins un ensemble à ventouse aspirante comprenant lui-même une partie ventouse (8) comprenant une ventouse aspirante souple (18) qui, lorsqu'elle est appuyée contre une feuille à maintenir (26), se déforme avec pour conséquence que de l'air est expulsé à partir de l'intérieur de la ventouse et que celle-ci saisit la feuille, avec un passage (9, 9a) pour la communication d'air, entre l'intérieur de la ventouse et l'atmosphère extérieure; un corps de support (10) sur lequel la partie ventouse est montée; une soupape (17, 17a) pour ledit passage et un moyen de pression (15) pour cette soupape pour maintenir le passage fermé pendant l'opération de saisie par la partie ventouse; cet appareil présentant les caractéristiques suivantes: il comprend un chariot (21) portant le corps de support (10) pour le déplacer matériellement de façon répétitive dans un cycle de fonctionnement dans lequel il saisit au moins une feuille à un poste de saisie, fait passer la feuille de ce poste à un autre poste où la feuille est relâchée, et retourne ensuite au poste de saisie pour saisir une autre feuille; la partie ventouse est montée de manière à se déplacer axialement en se rapprochant et en s'éloignant du corps de support (10); le moyen de pression (15) a pour effet de pousser la partie ventouse vers le corps de support; et un moyen (26, 28) de relâchement de la feuille fonctionne au poste de relâchement de la feuille du cycle de fonctionnement pour éloigner, à l'encontre de l'action du moyen de pression (15), la partie ventouse (8) du corps de support (10) et ouvrir ainsi à l'air atmosphérique le passage d'air et provoquer le relâchement de la feuille saisie.

2. Appareil suivant la revendication 1, dans lequel le passage d'air est constituée par un tube (16) qui est relié à la ventouse (18) et qui peut glisser axialement dans le corps de support (10).

3. Appareil suivant la revendication 1, dans lequel la partie ventouse (8) comprend une tige (19) sur laquelle est montée la ventouse (18) et qui peut coulisser axialement dans le corps de support (10), et aussi un collier (17b) qui entoure la tige, l'extrémité du passage d'air (9a) qui est éloignée de la ventouse (18) est dans une surface du collier (17b), et cette surface est appuyée contre la soupape (17a) par le dispositif de pression (15).

4. Appareil suivant l'une quelconque des revendications 1 à 3, dans lequel la soupape (17, 17a) est constituée par un élément déformable élastiquement monté à l'intérieur de ou sur une partie rigide du corps de support (10).

5. Appareil suivant l'une quelconque des revendications 1 à 4, dans lequel le dispositif de pression (15) est un ressort.

6. Appareil suivant la revendication 1, dans lequel le moyen (26, 28) de relâchement de la feuille éloigne du corps de support (10) la partie ventouse (8) au moyen d'une pression exercée sur une feuille (24) maintenue par la ventouse (18).

7. Appareil suivant la revendication 6, dans lequel le moyen de relâchement (26, 28) comprend une ou plusieurs barres oscillantes qui appuient contre une feuille (24) mintenue par la ventouse.

**Patentansprüche**

1. Blattspender der wenigstens einen Saugnapfsatz mit einem Napfelement (8), welcher mit einem biegsamen Saugnapf (18) versehen ist, der im an einem Blatt (26) gedrückten Zustand unter folgerichtiger Luftaustreibung aus dem Saugnapfinneren und Erfassung des Blattes durch den Napfen verformt wird, und einen Luftdurchgang (9, 9a), der mit dem Napfinneren und der Aussenluft in Verbindung steht, aufweist, einen Tragkörper (10) auf welchem dieses Napfelement angeordnet ist, ein Ventil (17, 17a) für den Luftdurchgang und ein Vorspannungsmittel (15) für das Ventil um den Luftdurchgang während des durch das Napfelement ausgeübten Erfassungsvorganges in geschlossener Lage zu halten, dadurch gekennzeichnet, dass der Blattspender einen Schlitten (21) enthält, der den Tragkörper (10) zwecks wiederholten Versetzens während eines Arbeitszyklusses zum Ergreifen von wenigstens einem Blatt an einer Aufnahmestation unterstützt, zum Führen dieses Blattes von der betreffenden Station zu einer andren Station, in der es freigegeben wird, und zum anschliessenden Rückkehren zur Aufnahmestation zum Ergreifen eines andren Blattes; dass das Napfelement zum Ausführen einer axialen Hin- und Herbewegung in bezug auf den Tragkörper (10) montiert ist, dass durch die Wirkung des Vorspannungsmittels (15) das Napfelement zum Einnehmen seiner Lage zum Tragkörper hin veranlasst wird und dass Blattfreigabemittel (26, 28) vorgesehen sind, die in der Blattfreigabestation während des Arbeitszyklusses wirksam sind um die Bewegung des Napfelementes (8) in Entfernung vom Tragkörper (10) wider die Einwirkung des Spannmittels (15) zu bewirken, wobei der Luftdurchgang zur atmosphärischen Luft geöffnet und das ergriffene Blatt freigegeben wird.

2. Blattspender nach Anspruch 1, dadurch gekennzeichnet dass der Luftdurchgang (9) durch ein an den Saugnapf (18) angeschlossenes Rohr (16) gebildet ist, das axial im Tragkörper (10) gleitend beweglich ist.

3. Blattspender nach Anspruch 1, dadurch gekennzeichnet daß das Napfelement (8) eine Spindel (19), auf der der Saugnapf (18) montiert und welche im Tragkörper (10) gleitend beweglich ist, und ebenfalls einen die Spindel (19) umgebenden Kragen (17b) enthält, wobei das vom Saugnapf (18) meist entfernte Ende des Luftdurchganges (9a) in einer Fläche des Kragens (17b) angebracht ist und wobei diese Fläche durch das Vorspannungsmittel (15) an das Ventil (17a) gedrückt wird.

4. Blattspender nach irgendeindem der Ansprüche 1 bis 3, dadurch gekennzeichnet daß das Ventil (17, 17a) durch ein in oder auf ein starres Teil des Tragkörpers (10) angebrachtes, elastisch verformbares Element gebildet wird.

5. Blattspender nach irgendeinem der Ansprüche 1 bis 4, dadurch gekennzeichnet dass das Vorspannungsmittel eine Feder ist.

6. Blattspender nach Anspruch 1, dadurch gekennzeichnet dass die Freigabemittel (26, 28) die Hinbewegung des Napfelementes in bezug auf den Tragkörper durch Andrücken an ein durch den Saugnapf (18) gefasstes Blatt (24) ausführen.

7. Blattspender nach Anspruch 6, dadurch gekennzeichnet dass die Freigabemittel (26, 28) wenigstens eine Pendelstange zum Andrücken an ein durch den Saugnapf gehaltenes Blatt (24) enthalten.

0 095 218

FIG. 1

FIG. 2

FIG. 3

1